# EUROPEAN PATENT APPLICATION

(11) **EP 3 153 387 A1**
(43) Date of publication of application: **12.04.2017**
(21) Application number: 16190734.0
(22) Date of filing: 27.09.2016
(51) Int. Cl.: B62J 7/04, B62J 27/00, B62K 19/46

(54) **GRAB RAIL STRUCTURE FOR SADDLE-RIDE TYPE VEHICLE**

(30) Priority: 30.09.2015 JP 2015192784
(71) Applicant: Honda Motor Co., Ltd., Minato-ku Tokyo 107-8556 (JP)
(72) Inventor: KATAOKA, Keiko, Wako-shi, Saitama 351-0193 (JP)
(74) Representative: Brevalex

(57) **Abstract**

Problem

To provide a grab rail structure for a saddle-ride type vehicle which is easy for a pillion passenger to grasp a grab rail.

Solution

A carrier section 30 having a loading surface 31 for loading an article 50 disposed behind a passenger seat 17 is integrally formed with a grab rail 40 extending from a lateral side of the carrier section 30 to a lateral side of the passenger seat 17 to be grasped by a pillion passenger; the grab rail 40 includes a fastened portion 41 fastened to a body below the passenger seat 17, a grip portion 42 curved to be arching as extending from the fastened portion 41 rearward of the body, and a connection portion 43 extending from a rear part of the grip portion 42 to the carrier section 30; and the connection portion 43 extends from the rear part of the grip portion 42 inward in a vehicle width direction as viewed in a plan view to reach the carrier section 30 and is lower than the loading surface 31 of the carrier section 30.

## Description

### Technical Field

The present invention relates to a grab rail structure for a saddle-ride type vehicle.

### Background Art

Heretofore, as described in Patent Literature 1 for example, a grab rail structure for a saddle-ride type vehicle is known in which a carrier portion (13c) having a loading surface for loading an article disposed behind a passenger seat (11) is integrally formed with a grab rail (13a) extending from lateral sides of the carrier portion (13c) to lateral sides of the passenger seat (11) to be grabbed by a pillion passenger.

### Citation List

### Patent Literature

JP 2002-068044 A

### Summary of Invention

### Technical Problem

In the grab rail structure for the saddle-ride type vehicle of the aforementioned prior art, the grab rail (13a) is disposed lower than the carrier portion (13c), and this requires the pillion passenger to extend his/her arms lower than the carrier portion (13c) when grasping the grab rail (13a). Therefore, it is not easy to grasp the grab rail (13a).

The problem the present invention seeks to solve is to provide a grab rail structure for a saddle-ride type vehicle that is easy for a pillion passenger to grasp a grab rail.

### Solution to Problem

In order to solve the aforementioned problem, a grab rail structure for a saddle-ride type vehicle according to the present invention comprises a grab rail with an integrated carrier for the saddle-ride type vehicle in which a carrier section having a loading surface for loading an article disposed behind a passenger seat is integrally formed with a grab rail extending from a lateral side of the carrier section to a lateral side of the passenger seat to be grasped by a pillion passenger, wherein:
the grab rail includes a fastened portion fastened to a body below the passenger seat, a grip portion curved to be arching as extending from the fastened portion rearward of the body, and a connection portion extending from a rear part of the grip portion to the carrier section; and
the connection portion extends from the rear part of the grip portion inward in a vehicle width direction as viewed in a plan view to reach the carrier section and is lower than the loading surface of the carrier section.

According to this grab rail structure for the saddle-ride type vehicle, since the grab rail has the grip portion that is curved to be arching as extending from the fastened portion to the body rearward of the body, it is possible to locate a mountain part of the curved portion being arching at a position as high as possible. Accordingly, it becomes easy for the pillion passenger to grasp the grip portion, that is, the grab rail.

In addition, although the grip portion can be located at a high position by being curved to be arching, the connection portion extending from the rear part of the grip portion to the carrier section is configured to be lower than the loading surface of the carrier section, and thus, the grab rail can be made to be hard to interfere with a loaded article when the same is loaded on the carrier section. Therefore, freedom can be enhanced in shape of the loaded article loaded on the carrier section. Further, since the grab rail is hard to interfere with the loaded article, the state in loading of the loaded article can also be stabilized.

In the grab rail structure for the saddle-ride type vehicle, the connection portion may take a construction having a hollow depressed downward.

With the construction taken like this, it is possible to secure a noninterference area between the grab rail and the loaded article and at the same time, to secure the height of the grip portion.

In the grab rail structure for the saddle-ride type vehicle,
there may be taken a construction wherein an uppermost end part of the grip portion is formed to be almost the same height as the loading surface.

With the construction taken like this, also in the case where the grip portion and the carrier section are formed integrally, the uppermost end part of the grip portion is formed to be almost the same height as the loading surface. This makes it possible for the pillion passenger to grasp the grip portion at a high position, and hence, it becomes easier for the pillion passenger to grasp the grip portion. Further, as the case may be, the uppermost end part of the grip portion becomes easier to be utilized as a loading portion.

In the grab rail structure for the saddle-ride type vehicle,
there may be taken a construction wherein the grip portion is provided on an outer side than the carrier section in the vehicle width direction.

With the construction taken like this, since the pillion passenger can grasp the grip portion on the outer side than the carrier section in the vehicle width direction, it becomes easier for the pillion passenger to grasp the grip portion.

In the grab rail structure for the saddle-ride type vehicle,
there may be taken a construction wherein an opening is formed between a side cover disposed on a lateral side of the body and the grip portion.

With the construction taken like this, it becomes easier for the pillion passenger to grasp the grip portion through the opening formed between the side cover and the grip portion.

In the grab rail structure for the saddle-ride type vehicle,
there may be taken a construction wherein an uppermost end part of the grip portion is located higher than a lowermost end part of the loading surface of the carrier section.

With the construction taken like this, since the uppermost end part of the grip portion is located higher than the lowermost end part of the loading surface of the carrier section, the pillion passenger can grasp the grip portion at a high position, so that it becomes easier to grasp the grip portion.

In the grab rail structure for the saddle-ride type vehicle,
there may be taken a construction wherein the grip portion is formed to be curved outward in the vehicle width direction as viewed in a plan view.

With the construction taken like this, since the position where the pillion passenger grasps the grip portion can be provided on a further outer side in the vehicle width direction, it becomes easier for the pillion passenger to grasp the grip portion.

In the grab rail structure for the saddle-ride type vehicle,
there may be taken a construction wherein an inside end part in the vehicle width direction of the grip portion is formed to be curved outward in the vehicle width direction as viewed in a plan view.

With the construction taken like this, a large opening can be secured between the inside end part in the vehicle width direction of the grip portion and the passenger seat, so that it becomes easier for the pillion passenger to grasp the grip portion.

### Brief Description of Drawings

FIG. 1 is a front view showing one example of a saddle-ride type vehicle to which an embodiment of a grab rail structure for a saddle-ride type vehicle according to the present invention is applied.
FIG. 2 is a left side view of the embodiment.
FIG. 3(a) is an enlarged view of a part in FIG. 2, and FIG. 3(b) is an enlarged view of a part in FIG. 3(a).
FIG. 4 is a plan view showing the embodiment of the grab rail structure for the saddle-ride type vehicle according to the present invention.
FIG. 5 is a perspective view of the rail structure partly omitted.
FIG. 6 is a left-side view of the rail structure partly omitted in the state of an article loaded.
FIG. 7 is a rear view of the rail structure loaded with the article.
FIG. 8 is a sectional view taken along the line 8-8 in FIG. 6.
FIG. 9 is a plan view of a modified form of a grab rail with an integrated carrier.

### Description of Embodiments

Hereinafter, an embodiment of a grab rail structure for a saddle-ride type vehicle according to the present invention will be described with reference to the drawings. Incidentally, the drawings are to be viewed in the direction of reference numerals, and in the following description, front-rear, right-left and upper-lower are described as those as viewed by the rider. Further, as the case may be, the drawings represent the forward side of the vehicle as Fr, the rearward side as Rr, the left side as L, the right side as R, the upper side as U, and the down side as D. Further, throughout the respective views, the same reference numerals are given to the same or corresponding parts.

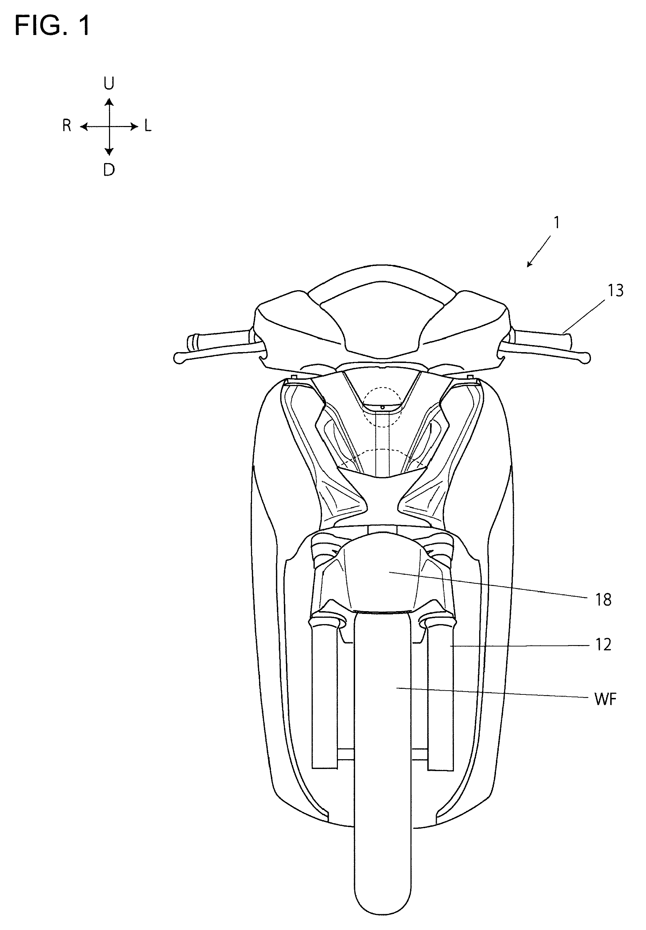

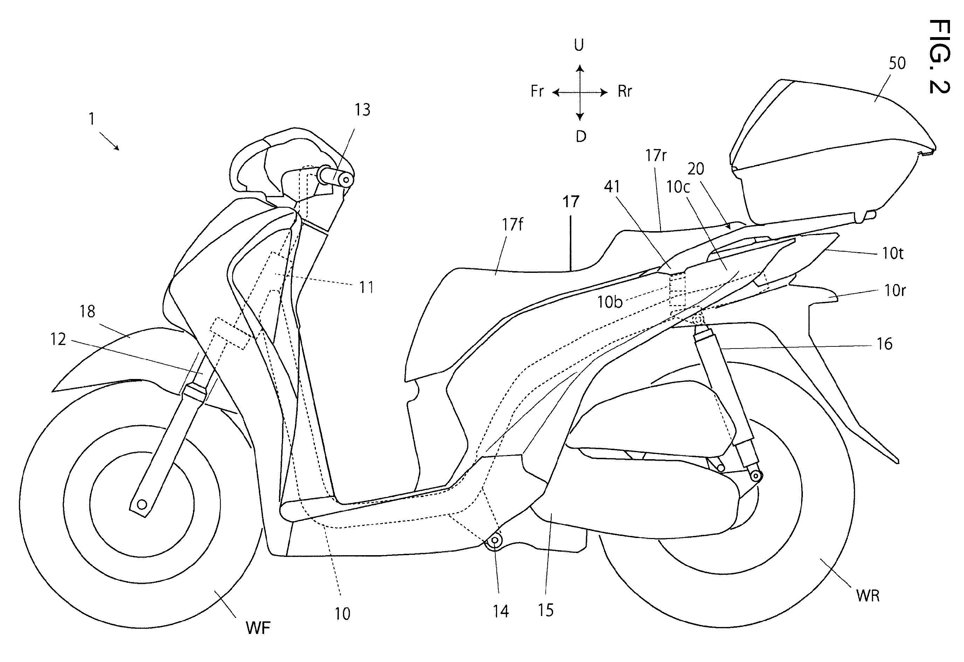

A saddle-ride type vehicle 1 shown in FIG. 1 and FIG. 2 is provided with a body frame 10 and a head pipe 11 provided at a front part of the body frame 10. A front fork 12 is steerably attached to the head pipe 11, and a front wheel WF is attached to a lower end of the front fork 12. An upper part of the front wheel WF is covered with a front fender 18. A steering handle 13 is attached to an upper portion of the front fork 12. A power unit 15 is swingably supported by the body frame 10 through a pivot 14, and a rear wheel WR driven by the power unit 15 is provided at a rear end of the power unit 15. The rear wheel WR is covered with a rear fender 10r. Numeral 10t denotes a taillight. A cushion unit 16 is provided between the rear part of the power unit 15 and the body frame 10.

Behind the steering handle 13, there is provided a passenger seat 17 for a rider and a pillion passenger to ride on. The rider rides on a front portion 17f of the passenger seat 17, and the pillion passenger rides on a rear portion 17r of the the passenger seat 17. A grab rail 20 with an integrated carrier is provided behind the passenger seat 17.

The grab rail structure for the saddle-ride type vehicle 1 in this embodiment relates to the structure of the grab rail 20 with the integrated carrier.

As shown in FIG. 2 and FIG. 3 through FIG. 5, in the the grab rail 20 with the integrated carrier, a carrier section 30 having a loading surface 31 for loading a loaded article 50 disposed behind the passenger seat 17 is integrally formed with a grab rail 40 extending from lateral sides of the carrier section 30 to lateral sides of the passenger seat 17 to be grasped by the pillion passenger.

The grab rail 40 includes fastened portions 41 that are fastened to the body frame 10 below the passenger seat 17, grip portions 42 curved to be arching as they extend from the fastened portions 41 rearward of the body, and connection portions 43 extending from rear parts of the grip portions 42 to the carrier section 30.

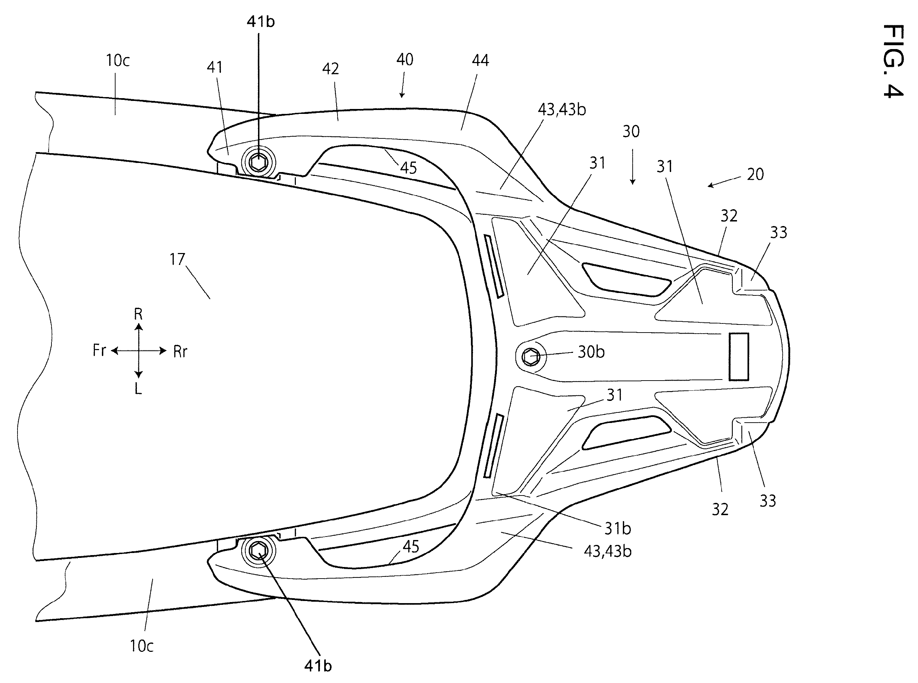

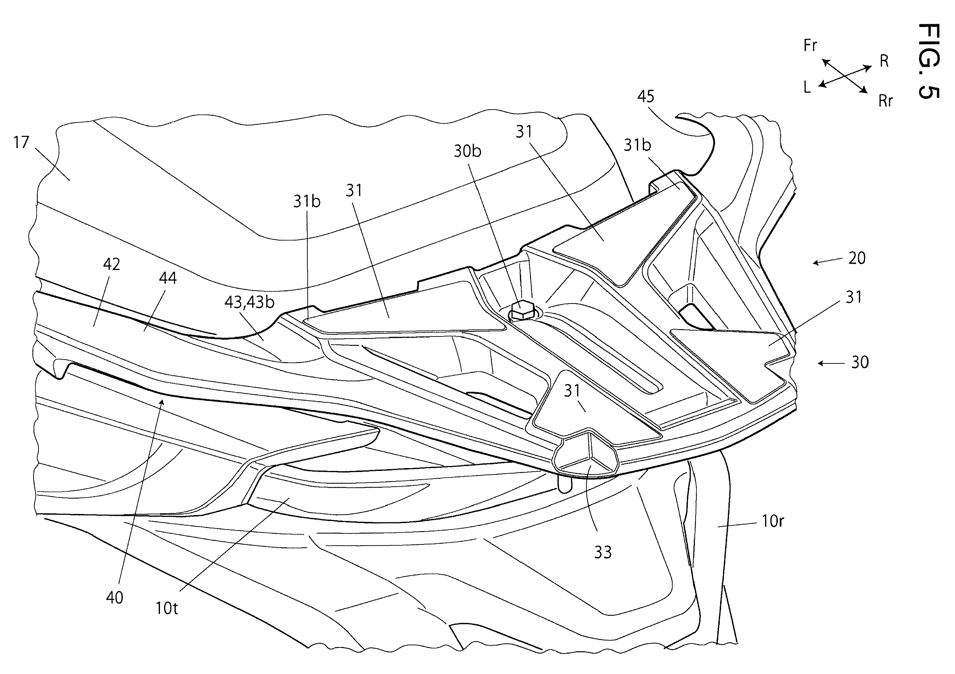

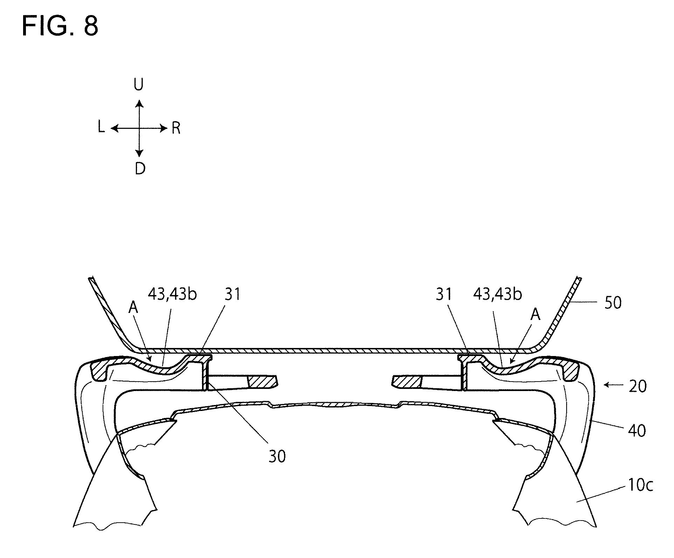

As viewed in a plan view (FIG. 4), the connection portions 43 extend from the rear parts of the grip portions 42 inward in the vehicle width direction to reach the carrier section 30 and are located lower than the loading surface 31 of the carrier section 30 (refer to FIG. 5 and FIG. 8).

According to the grab rail structure in this saddle-ride type vehicle 1, since the grab rail 40 has the grip portions 42 that are curved to be arching as they extend from the fastened portions 41 to the body frame 10 rearward of the body, it is possible to locate mountain parts 44 of the curved portions being arching at a position as high as possible. Accordingly, it becomes easy for the pillion passenger to grasp the grip portions 42, that is, the grab rail 40.

In addition, although the grip portions 42 can be located at a high position by being curved to be arching, the connection portions 43 extending from the rear parts of the grip portions 42 to the carrier section 30 are configured to be lower than the loading surface 31 of the carrier section 30. Thus, as shown in FIG. 8, the grab rail 40 can be made to be hard to interfere with a loaded article 50 when the loaded article 50 is loaded on the carrier section 30. Therefore, freedom can be enhanced in shape of the loaded article 50 loaded on the carrier section 30. Further, since the grab rail 40 is hard to interfere with the loaded article 50, the state in loading of the loaded article 50 can also be stabilized.

As shown in FIG. 4, the grab rail 20 with the integrated carrier is fixed to the body in such a manner that the fastened portions 41, 41 at the front end of the grab rail 40 are fastened by bolts 41b to the body frame 10 through brackets 10b (FIG. 2) and that the carrier section 30 is fastened by a bolt 30b (FIG. 4) to the body frame 10.

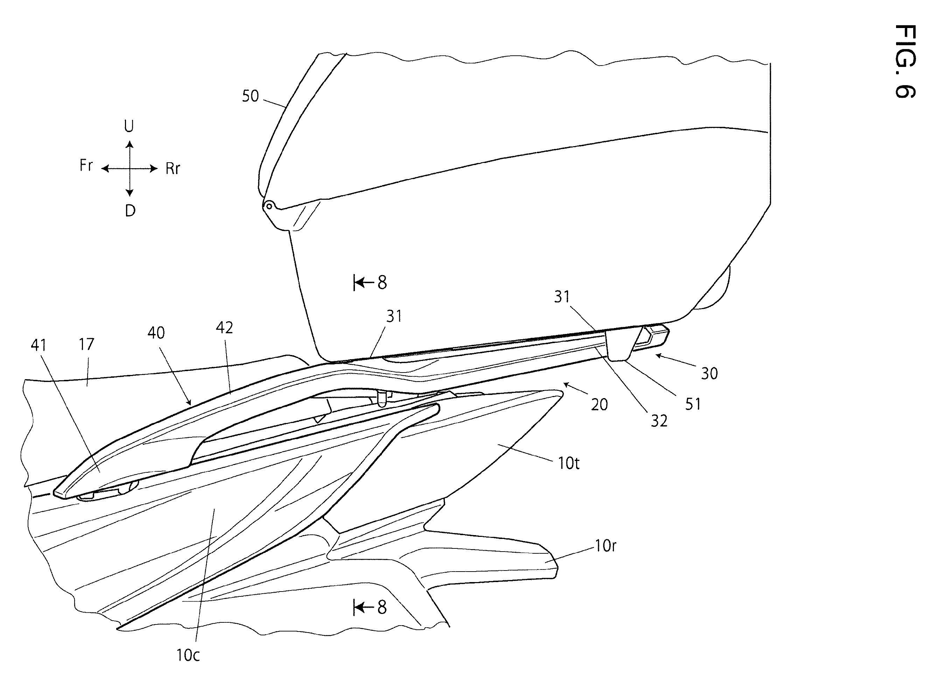

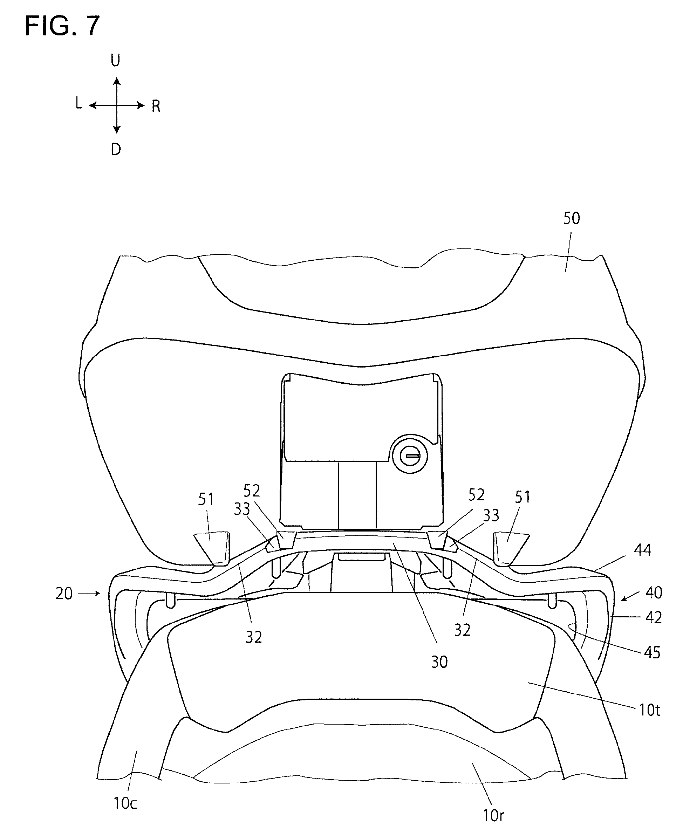

The loaded article 50 shown in FIG. 2, FIG. 6 and FIG. 7 is a top box. As shown in FIG. 6 and FIG. 7, the top box 50 is provided at its bottom part with positioning lugs 51, 52 against the carrier section 30. The positioning lugs 51 abut on right and left outside surfaces 32 of the carrier section 30, while the positioning lugs 52 abut on recesses 33 (refer to FIG. 5) provided at right and left rear parts of the carrier section 30. The top box 50 is fixedly fastened by bolts (not shown) to the carrier section 30 from the lower side of the carrier section 30.

Further, as viewed in a plan view (FIG. 4), the right and left outside surfaces 32 of the carrier section 30 gradually contracts inward in the vehicle width direction as they extend from the connection portions 43 rearward. The gradual contraction rearward of the body can make the carrier section 30 compact in dimension in the vehicle width direction.

As shown in FIG. 8, the connection portions 43 have hollows 43b depressed downward.

With the construction taken like this, it is possible to secure noninterference areas A between the grab rail 40 and the loaded article 50 and at the same time, to secure the height of the grip portions 42.

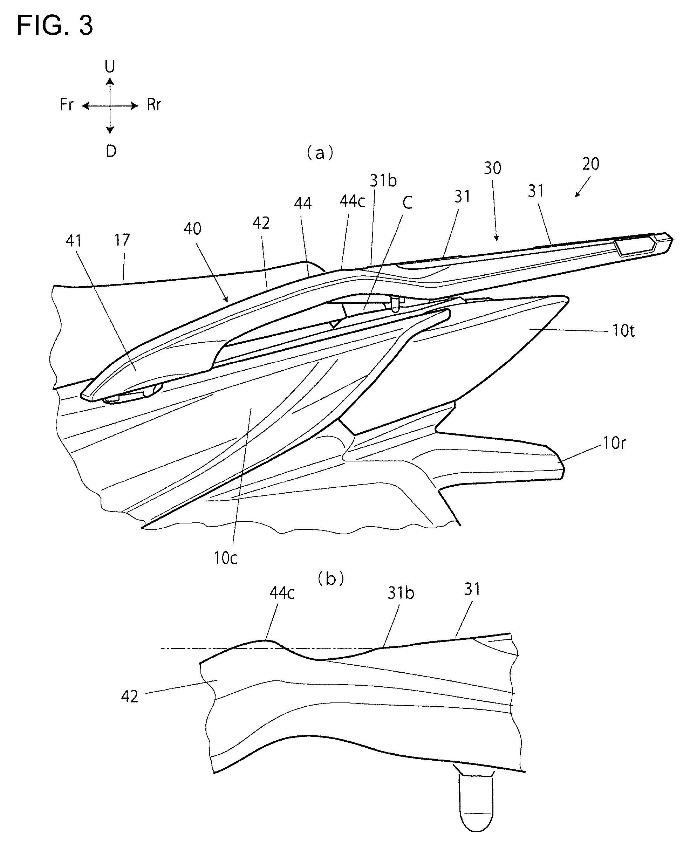

As shown in FIG. 3(a), uppermost end parts 44c of the grip portions 42 are formed to be almost the same height as the loading surface 31.

With the construction taken like this, also in the case where the grip portions 42 and the carrier section 30 are formed integrally, the uppermost end parts 44c of the grip portions 42 are formed to be almost the same height as the loading surface 31. This makes it possible for the pillion passenger to grasp the grip portions 42 at a high position, so that it becomes easier for the pillion passenger to grasp the grip portions 42. Further, as the case may be, the uppermost end parts 44c of the grip portions 42 become easier to be utilized as loading portions.

As shown in FIG. 3(b), there may be taken a construction wherein the uppermost end parts 44c of the grip portions 42 are located higher than lowermost end parts 31b of the loading surface 31 of the carrier section 30.

With the construction taken like this, since the uppermost end parts 44c of the grip portions 42 are located higher than the lowermost end parts 31b of the loading surface 31 of the carrier section 30, the pillion passenger can grasp the grip portions 42 at a high position, so that it becomes easier to grasp the grip portions 42.

As shown in FIG. 4, the grip portions 42 are provided on outer sides than the carrier section 30 in the vehicle width direction.

With the construction taken like this, since the pillion passenger can grasp the grip portions 42 on the outer sides than the carrier section 30 in the vehicle width direction, it becomes easier for the pillion passenger to grasp the grip portions 42.

In FIG. 2 and FIG. 3(a), numeral 10c denotes side covers disposed on lateral sides of the body. As shown in FIG. 3, openings C are formed between the side covers 10c and the grip portions 42.

With the construction taken like this, it becomes easier for the pillion passenger to grasp the grip portions 42 through the openings C formed between the side covers 10 and the grip portions 42.

As shown in FIG. 4, the grip portions 42 are formed to be curved outward in the vehicle width direction as viewed in a plan view.

With the construction taken like this, since the positions where the pillion passenger grasps the grip portions 42 can be provided on further outer sides in the vehicle width direction, it becomes easier for the pillion passenger to grasp the grip portions 42.

As shown in FIG. 4, inside end parts (inside verges) 45 in the vehicle width direction of the grip portions 42 are formed to be curved outward in the vehicle width direction as viewed in a plan view.

With the construction taken like this, large opening can be secured between the inside end parts 45 in the vehicle width direction of the grip portions 42 and the passenger seat 17, so that it becomes easier for the pillion passenger to grasp the grip portions 42.

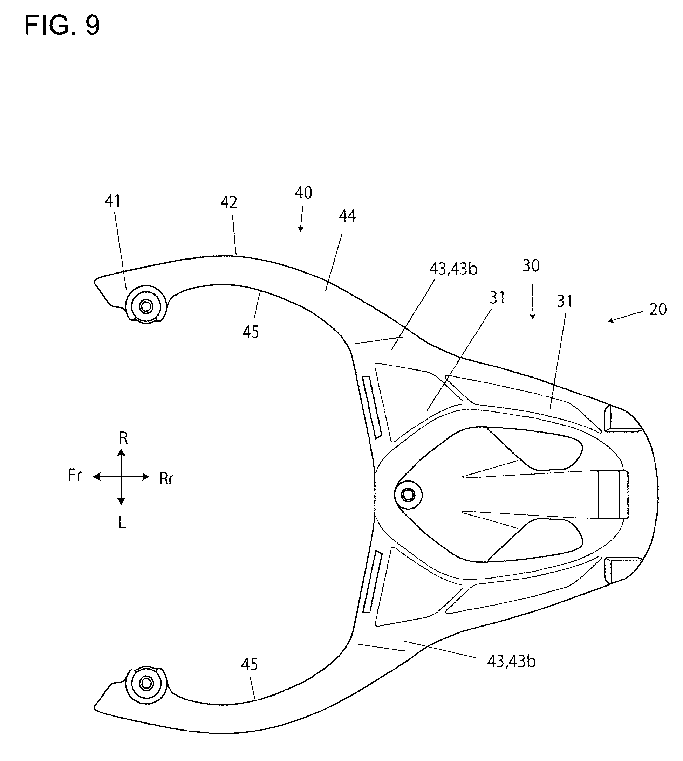

FIG. 9 is a plan view showing another embodiment. The same or corresponding portions as those in the aforementioned embodiment are given identical reference numerals.

Although the embodiments of the present invention have been described hereinabove, the present invention is not limited to the foregoing embodiments and may suitably be modified without departing from the scope of the gist set forth in the claims. Reference Signs List
1: saddle-ride type vehicle, 10: body frame, 10c: side cover, 17: passenger seat, 20: grab rail with integrated carrier, 30: carrier section, 31: loading surface, 40: grab rail, 41: fastened portion, 42: grip portion, 43: connection portion, 43b: hollow, 44c: uppermost end part, C: opening, 45: inside end part in vehicle width direction of grip portion 42, 50: loaded article

## Claims

1. A grab rail structure for a saddle-ride type vehicle comprising a grab rail (20) with an integrated carrier for the saddle-ride type vehicle in which a carrier section (30) having a loading surface (31) for loading an article (50) disposed behind a passenger seat (17) is integrally formed with a grab rail (40) extending from a lateral side of the carrier section (30) to a lateral side of the passenger seat (17) to be grasped by a pillion passenger, wherein:
the grab rail (40) includes a fastened portion (41) fastened to a body below the passenger seat (17), a grip portion (42) curved to be arching as extending from the fastened portion (41) rearward of the body, and a connection portion (43) extending from a rear part of the grip portion (42) to the carrier section (30); and
the connection portion (43) extends from the rear part of the grip portion (42) inward in a vehicle width direction as viewed in a plan view to reach the carrier section (30) and is lower than the loading surface (31) of the carrier section (30).

2. The grab rail structure for the saddle-ride type vehicle according to Claim 1, wherein:
the connection portion (43) has a hollow (43b) depressed downward.

3. The grab rail structure for the saddle-ride type vehicle according to Claim 1 or 2, wherein:
an uppermost end part (44c) of the grip portion (42) is formed to be almost the same height as the loading surface (31).

4. The grab rail structure for the saddle-ride type vehicle according to any one of Claims 1 to 3, wherein:
the grip portion (42) is provided on an outer side than the carrier section (30) in the vehicle width direction.

5. The grab rail structure for the saddle-ride type vehicle according to any one of Claims 1 to 4, wherein:
an opening (C) is formed between a side cover (10c) disposed on a lateral side of the body and the grip portion (42).

6. The grab rail structure for the saddle-ride type vehicle according to any one of Claims 1 to 5, wherein:
an uppermost end part (44c) of the grip portion (42) is located higher than a lowermost end part (31b) of the loading surface (31) of the carrier section (30).

7. The grab rail structure for the saddle-ride type vehicle according to any one of Claims 1 to 6, wherein:
the grip portion (42) is formed to be curved outward in the vehicle width direction as viewed in a plan view.

8. The grab rail structure for the saddle-ride type vehicle according to any one of Claims 1 to 7, wherein:
an inside end part (45) in the vehicle width direction of the grip portion (42) is formed to be curved outward in the vehicle width direction as viewed in a plan view.
